# EUROPEAN PATENT APPLICATION

(11) **EP 4 393 898 A1**
(43) Date of publication of application: **03.07.2024**
(21) Application number: 22919732.2
(22) Date of filing: 07.05.2022
(51) Int. Cl.: C04B 35/50, C04B 35/622, C04B 35/624, C04B 37/00

(54) **PREPARATION METHOD FOR MULTILAYER CERAMIC MEMBRANE HAVING OXIDE THIN LAYER, AND APPLICATION**

(30) Priority: 14.01.2022 CN 202210044306
(71) Applicant: Qingdao Institute of Bioenergy and Bioprocess Technology, Chinese Academy of Sciences, Qingdao, Shandong 266101 (CN)
(72) Inventor: JIANG, Heqing, Qingdao, Shandong 266101 (CN); HE, Guanghu, Qingdao, Shandong 266101 (CN)
(74) Representative: Thoma, Michael
(86) International application number: PCT/CN2022/091517
(87) International publication number: WO 2023/134092

(57) **Abstract**

The present invention relates to a preparation method for a multilayer ceramic membrane having an oxide thin layer and application. A composite material made up of a fluorite-type oxide and a perovskite-type or spinel-type oxide is pre-formed, and then high-temperature thermal treatment under contact with Al₂O₃ is carried out to obtain a multilayer ceramic membrane having a fluorite-type oxide thin layer. The density of the fluorite-type oxide thin layer is adjustable, the thickness is controllable and can be as thin as about 1 micron, there is good compatibility between each layer of the multilayer ceramic, and same does not peel or de-layer. In addition, a multilayer ceramic preparation process provided in the present invention is simple, has good repeatability, and is readily scaled up. When the multilayer ceramic is used as a hybrid conductive membrane, said ceramic continuously and stably works for over 1000 hours in an atmosphere containing H₂, CO₂, CH₄, and H₂S, and serves as an oxygen permeable membrane to stably and efficiently carry out industrial byproduct hydrogen-driven water decomposition and hydrogen production. In addition, a multilayer ceramic preparation technique provided in the invention is expected to be applied in fields such as solid oxide fuel cells, high-temperature electrolytic batteries, and gas sensors.

## Description

### TECHNICAL FIELD

The present invention relates to a preparation method and application for multilayered ceramic membranes with thin oxide layers. The resulting multilayered ceramic membranes possess both excellent stability and high oxygen permeability and thus can be used as oxygen permeable membranes for producing hydrogen by purifying industrial by-product hydrogen. This technique for direct fabrication of multilayered ceramics in present invention has promising prospects for the application in many fields such as solid oxide cells, ceramic membrane reactors and gas sensors.

### BACKGROUND

The information disclosed in this background art section is intended to increase the overall understanding of the general background of the present invention, and shall not necessarily be deemed as an acknowledgement or any form implying that such information constitutes the prior art that has already been known to those skilled in the art.

Multilayered ceramic is the common configuration of many energy conversion and electronic devices. For example, solid oxide fuel cells (SOFCs) and electrolysis cells (SOECs) are mainly composed of dense electrolyte layers, anode (cathode) layers and cathode (anode) layers. Ceramic capacitors mainly include three layers: ceramic dielectric, internal electrode and external electrode. Oxygen gas sensors consist of solid electrolyte and diffusion electrode layers on the opposite sides. Ceramic catalytic membrane reactors mainly consist of porous support layer, dense separation layer and porous catalytic layer. Therefore, the controllable and facile preparation of multilayered ceramics is the common and key technology for the extensive application of the above energy conversion and electronic devices.

Taking ceramic membranes for hydrogen purification as an example, the current status and challenges of the preparation technology of multilayered ceramics will be described. The hydrogen energy industry is an emerging field with strategic and leading significance, representing an important direction for energy development. Purification of industrial by-product hydrogen is currently a more realistic and inexpensive hydrogen production method, which could help reduce operating costs of hydrogen fuel cells. The existence of trace CO impurities in hydrogen stream can rapidly poison fuel cell catalysts. Therefore, the development of CO-free hydrogen (CO≤0.2ppm) production technology has become an important research direction in hydrogen energy field.

Alternatively, a promising strategy for H₂ purification was recently proposed using ceramic oxygen permeable membranes, which feature mixed oxygen ionic-electronic conductivity and possess 100 % O₂ selectivity at elevated temperatures. When the two sides of the membranes are subjected to steam and low-purity H₂ streams, respectively, water dissociates into H₂ and O₂ on the feed side, the O₂ is removed as oxygen ions (O²⁻) through the membrane to the sweep side and there consumed by the oxidation of low-purity H₂ to water. Consequently, pure H₂ can be obtained after steam condensation on the feed side. However, traditional cobalt- or iron-containing oxygen permeable membranes struggle to achieve both high stability and oxygen permeability. Particularly cobalt or iron ions in the membrane material are prone to deep reduction or the formation of carbonates or sulfates on the membrane surface under reducing atmospheres containing H₂, CH₄, CO, etc. or acidic atmospheres containing CO₂ and H₂S, leading to membrane performance degradation. To address these issues, researchers have developed neither cobalt or iron-free doped CeO₂ (Ce_{0.9}Gd_{0.1}O_{2-δ}, PrₓCe_{0.9-x}Gd_{0.1}O_{1.95-δ}), which exhibit mixed oxygen ionic-electronic conductivity under low oxygen partial pressure atmospheres and demonstrate excellent stability in harsh atmospheres containing H₂, CO₂, CO, H₂S, etc. Thus, such materials show promise as oxygen permeable membranes for coupling water splitting with industrial by-product hydrogen oxidation to produce CO-free hydrogen gas.

To enhance the hydrogen production rate, it is desirable to minimize the thickness of the doped CeO₂ dense layer. Therefore, the key technology is to deposit a thin CeO₂ layer on a support layer to form an asymmetric-structured oxygen permeable membrane. A serial procedure is normally required, starting from the initial preparation of porous support layer, followed by the deposition of ion conducting dense thin layer on the porous support, and subsequential multiple drying-sintering steps. However, most of these methods are time-consuming, energy-intensive and lack of fabrication flexibility. In addition, the deposited thin layers often delaminate from the support layers during co-sintering because of the thermal expansion mismatch between different layers. Thus, an efficient approach to decrease the thickness of ion conducting dense layer and significantly enhance the interlaminar adhesion in multilayered ceramic membranes is in great demand.

### SUMMARY

The present invention addresses the challenge of traditional mixed conducting membranes not being able to simultaneously possess chemical stability and oxygen permeation performance under hydrogen purification atmospheres. The invention proposes an interface reaction-induced strategy to construct multilayered ceramic membranes with doped cerium oxide thin layers. In addition, this strategy is also applicable for the preparation of multilayered structures based on doped zirconium oxide, which has been widely used in solid oxide fuel cells, electrolytic cells and gas sensors.

To achieve the aforementioned technical objectives, the present invention adopts the following technical solutions:
In the first aspect of the present invention, provided a method for preparing a multilayered ceramic membrane with a thin oxide layer, comprising:
making a composite material with fluorite-structured oxide and perovskite-structured or spinel-structured oxide as raw materials, then preforming to obtain a green body;
contacting the surface of the green body with Al₂O₃, thus obtaining the multilayered ceramic membrane with a thin oxide layer after a sintering process.

The present invention provides a multilayered ceramic membrane that possesses both high chemical stability and oxygen permeability, and the method has the characteristics of simplicity, high efficiency and good repeatability.

In the second aspect of the present invention, provided a multilayered ceramic membrane with a thin oxide layer prepared using the aforementioned method, the multilayered ceramic membrane comprises a bilayer structure or a three-layered structure;
wherein, the bilayer structure consists of a single-phase fluorite-structured CAO or BZO thin layer and a composite layer;
the three-layered structure includes a single-phase CAO or BZO layer, a dense composite layer in the middle and a porous layer on the bottom side. Alternatively, the three-layered structure includes a single-phase CAO or BZO thin layer, a dense composite layer in the middle, and a CAO or BZO thin layer on the bottom side.

In the third aspect of the present invention, provided an application of a multilayered ceramic membrane with a thin oxide layer as described above in separating oxygen from oxygen-containing mixed gases, catalytic partial oxidation of hydrocarbons, hydrogen production through H₂O decomposition and solid oxide cells.

The beneficial effects of the present invention include:
(1) Different from traditional methods for preparing multilayered ceramics, the present invention provides an interface-induced phase separation strategy. By mixing a fluorite-structured oxide (*e.g.* doped cerium oxide or zirconium oxide) with a perovskite or spinel-structured oxide, a dual-phase composite powder is obtained. After pressing process, the green pellet is brought into contact with alumina (acting as an interface-inducing agent). At a certain temperature, phase separation occurs at the interface between the pellet and alumina, resulting in the formation of a bilayered or three-layered membrane with doped cerium oxide or zirconium oxide thin layers. Furthermore, the density and thickness of the thin layers can be adjusted, reaching to ∼1 micrometer thickness. What is more, the interface-reaction-induced thin layers exhibit much stronger adhesion to the parent layer, avoiding warpage and/or delamination of the thin layer.
(2) Different from multilayered ceramic membranes are typically fabricated using layer-by-layer deposition strategy, the present invention discovers for the first time that alumina can be used as an inducing agent to come into contact with the multiphase composite ceramic material. At a certain temperature, alumina induces phase separation at the interface of the composite ceramic, directly forming a multilayered structure consisting of a thin oxide layer (derived from the bulk material) and the bulk composite support layer. The density and thickness of the thin layers can be easily adjusted. For example, a bilayer structure can consist of a single-phase fluorite-structured CAO or BZO thin layer and a composite layer, while a three-layered structure includes a single-phase CAO or BZO thin layer, a composite dense layer in the middle, and a porous layer on the bottom side, or it may comprise a single-phase CAO or BZO thin layer, a dense composite layer in the middle, and a CAO or BZO thin layer on the bottom side.
(3) The present method for preparing multilayered ceramics with thin layers is straightforward and easily scalable. When used as a mixed conducting membrane, this multilayered membrane exhibits high stability for over 1000 hours in harsh environments containing H₂, CO₂, CH₄ and H₂S. Additionally, it demonstrates excellent oxygen permeability, making it suitable for efficient hydrogen purification.
(4) Such simple preparation technique in the present invention for multilayered ceramics with zirconia or ceria based thin films holds great promise for applications in solid oxide fuel cells, high-temperature electrolytic cells, gas sensors and other fields.
(5) The operational method disclosed in this application is simple, cost-effective, universally applicable, and suitable for scale-up production.

### BRIEF DESCRIPTION OF THE DRAWINGS

The drawings accompanying the specification forming a part of the present invention serve to provide a further understanding of the present invention. The schematic embodiments of the present invention and their description are used to explain the present invention and do not constitute an improper limitation of the present invention.
FIG. 1 shows the X-ray diffraction patterns and scanning electron microscope images of the (CGO-GSFT)/CGO bilayered membrane prepared in Example 2 of the present invention.
FIG. 2 shows the scanning electron microscopy images of the (CGO-GSFT)/CGO bilayer structure obtained from the 60CGO-40GSFT green body, provided by Example 1 of the present invention, after being held at 1350 °C for 10 hours.
FIG. 3 shows the scanning electron microscope-energy-dispersive X-ray spectroscopy (SEM-EDX) images of the sample surface after the CGO-GSFT green body, provided by Example 1 of the present invention, was coated with nano Al₂O₃ colloidal solution and subsequently sintered at high temperature.
FIG. 4 shows the scanning electron microscope (SEM) image of the sample surface after the CSO-SSFT hollow fiber membrane green body, provided by Example 2 of the present invention, was spray-coated with Al₂O₃ colloidal solution and subsequently sintered at high temperature.
FIG. 5 shows the scanning electron microscope characterization image of the (CGO-GSFT)/(CGO-GSFT)/CGO three-layered ceramic membrane produced according to Example 3 of the present invention.
FIG. 6 shows the scanning electron microscope image of the (CGO-GSFT)/CGO bilayered ceramic with dimensions larger than 5 cm x 5 cm, provided by Example 4 of the present invention.

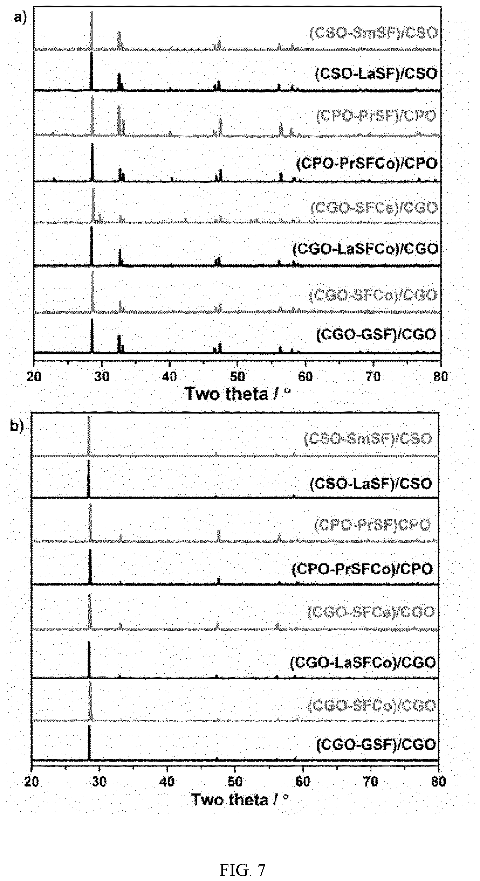

FIG. 7 shows the X-ray diffraction patterns of other multilayered ceramics prepared via an interface-reaction self-assembly strategy as provided by Example 5 of the present invention. The ceramics include: 60 mol.% Ce_{0.9}Gd_{0.1}O_{2-δ}-40 mol.% Gd_{0.1}Sr_{0.9}FeO_{3-δ} (CGO-GdSF), 60 mol.% Ce_{0.9}Gd_{0.1}O_{2-δ}-40 mol.% SrFe_{0.8}Co_{0.2}O_{3-δ} (CGO-SFCo), 60 mol.% Ce_{0.9}Gd_{0.1}O_{2-δ}-40 mol.% SrFe_{0.5}Ce_{0.5}O_{3-δ} (CGO-SFCe), 60 mol.% Ce_{0.9}Gd_{0.1}O_{2.δ}-40 mol.% La_{0.2}Sr_{0.8}Fe_{0.8}Co_{0.2}O_{3-δ} (CGO-LaSFCo), 60 mol.% Ce_{0.9}Pr_{0.1}O_{2-δ}-40 mol.% Pr_{0.6}Sr_{0.4}FeO_{3-δ} (CPO-PrSF), 60 mol.% Ce_{0.9}Pr_{0.1}O_{2-δ}-40 mol.% Pr_{0.6}Sr_{0.4}Fe_{0.8}Co_{0.2}O_{3-δ} (CPO-PrSFCo), 60 mol.% Ce_{0.9}Sm_{0.1}O_{2-δ}-40 mol.% La_{0.1}Sr_{0.9}FeO_{3-δ} (CSO-LaSF), 60 mol.% Ce_{0.9}Sm_{0.1}O_{2-δ}-40 mol.% Sm_{0.1}Sr_{0.9}FeO_{3-δ} (CSO-SmSF).
FIG. 8 presents the X-ray diffraction patterns and cross-sectional scanning electron microscopy (SEM) images of the top and bottom surfaces of samples obtained after a one-step heat treatment of green bodies made from 60 mol.% Ce_{0.8}Gd_{0.1}O_{2-δ}-40 mol.% NiFe₂O₄ (CGO-NFO) and 60 mol.% Ce_{0.9}Pr_{0.1}O_{2-δ}-40 mol.% Mn_{1.5}Co_{1.5}O₄(CPO-MCO). These samples were prepared using an interface-reaction self-assembly strategy as provided by Example 5 of the present invention.
FIG. 9 presents the X-ray diffraction patterns and cross-sectional scanning electron microscopy (SEM) images of the top and bottom surfaces of samples obtained after a one-step heat treatment of green bodies made from Y_{0.08}Zr_{0.92}O_{2-δ} -CoFe₂O₄ (YSZ-CFO). These samples were prepared using an interfacial self-assembly strategy as provided by Example 6 of the present invention.
FIG. 10 represents the performance of the (CGO-GSFT)/CGO bilayered ceramic, provided by Example 2 of the present invention, as a mixed conductor oxygen-permeable membrane for air separation, methane oxidation, and hydrogen production via water splitting.

### DETAILED DESCRIPTION

It should be noted that the following detailed descriptions are exemplary and intended to provide further explanation of the present invention. Unless otherwise indicated, all techniques and scientific terminology used in this document have the same meaning as understood by those skilled in the art to which the present invention belongs.

A method for preparing a multilayered ceramic membrane with a thin oxide layer, involving a composite material consisting of fluorite-structured oxide and perovskite-structured or spinel-structured oxide, then heating the green body with contacting Al₂O₃, thereby obtaining a multilayered ceramic membrane with a thin oxide layer.

The fluorite-structured oxide has a stoichiometric formula of Ce₁₋ₐAₐO_{2-δ} (CAO) or B_{b}Zr_{1-b}O₂₋₆ (BZO), where A is selected from one or more of La, Pr, Nd, Pm, Sm, Eu, Gd, Tb, Dy, Ho, Er, Tm and Yb, 0 ≤ a ≤1, δ is the oxygen lattice defect number. B is selected from one or more of Y, Sc, Yb, Pr, Bi, Er and Ce, 0 ≤ b ≤1, δ is the oxygen lattice defect number.

The perovskite-structured oxide has a stoichiometric formula of MₘSr₁₋ₘFe₁₋ₙNₙO_{3-δ} (MSFNO), where M is selected from one or more of La, Pr, Nd, Pm, Sm, Eu, Gd, Tb, Dy, Ho, Er, Tm, Yb, Ba, Ca and Bi; N is selected from one or more of Mg, Ca, Sc, Ti, V, Cr, Mn, Co, Ni, Cu, Zn, Zr, Y, Nb, Mo, Tc, Ru, Rh, Pd, Ag, Al, In, W, La, Gd and Ce; 0 ≤ m ≤ 0.5, 0 ≤ n ≤ 0.5, δ is the oxygen lattice defect number.

The spinel-structured oxide has a stoichiometric formula of X_{3-y}Y_{y}O₄ (XYO), where X is selected from one or more of Mg, Fe, Co, Ni, Mn, Zn and Cd, Y is selected from one or more of Al, Fe, Co, Cr, Ga and Mn, 0 ≤ y ≤ 3.

A method for making a composite material include, but are not limited to, ball milling, solid-state reaction, or a sol-gel method, and only uniform mixing of the powders is required. A method for preparing green bodies comprises dry pressing, phase conversion and extrusion molding method.

The Al₂O₃ is a sapphire wafer made of Al₂O₃ powder or nano Al₂O₃ colloidal solution.

A method for contacting the surface of the green body with Al₂O₃ comprises placing the green body on a sapphire wafer made of Al₂O₃, or sandwiching the green body between two sapphire wafers made of Al₂O₃, or coating the green body with a nano Al₂O₃ colloidal solution.

The multilayered ceramic membrane with fluorite-structured oxide thin layer includes a bilayered structure or a three-layered structure with good adhesion. The bilayered structure consists of a single-phase CAO or BZO thin layer and a composite layer. The three-layered structure includes a single-phase CAO or BZO thin layer, a dense composite layer in the middle, and a porous layer on the bottom side; or, the three-layered structure includes a single-phase CAO or BZO thin layer, a dense composite layer in the middle, and a CAO or BZO thin layer on the bottom side.

The multilayered ceramic membrane with fluorite-structured oxide thin layer is used for separating oxygen from oxygen-containing mixed gases, catalytic partial oxidation of hydrocarbons, hydrogen production through H₂O splitting, solid oxide cells.

The following provides further detailed explanation of the present invention in conjunction with specific examples. It should be noted that the specific examples are for explaining the present invention rather than limiting the present invention.

### Example 1: Preparation of CGO-GSFT composite powder by sol-gel method

Ce(NO₃)₄, Gd(NO₃)₃, Sr(NO₃)₂ and Fe(NO₃)₃ were dissolved in water according to the stoichiometric ratio of 60 mol.% Ce_{0.9}Gd_{0.1}O_{2-δ}-40 mol.% Gd_{0.1}Sr_{0.9}Fe_{0.9}Ti_{0.1}O_{3-δ}. Then, citric acid and ethylenediaminetetraacetic acid (EDTA) were added to the mixture with a molar ratio of 1.5 : 1 : 1 for citric acid, EDTA and metal ions. After stirring for a certain period, ammonia solution was added to adjust the pH value of the solution to 9, resulting in a clear solution. Next, tetrabutyl titanate, according to the stoichiometric ratio, was dissolved in an equimolar mixture of lactic acid, ethanol, and glacial acetic acid. The resulting titanium ion-containing solution was mixed with the previously obtained clear solution to form a precursor solution for 60CGO-40GSFT. After stirring for a certain period, the precursor solution was dehydrated at 120 °C to obtain a dark-colored sol. Subsequently, the sol was heated to 950 °C at a heating rate of 5 °C/min and maintained at the temperature for 10 hours. Finally, the temperature was decreased to room temperature at the same rate to obtain a well-mixed 60CGO-40GSFT powder.

### Example 2: Preparation of CeO₂-doped bilayer ceramic membrane

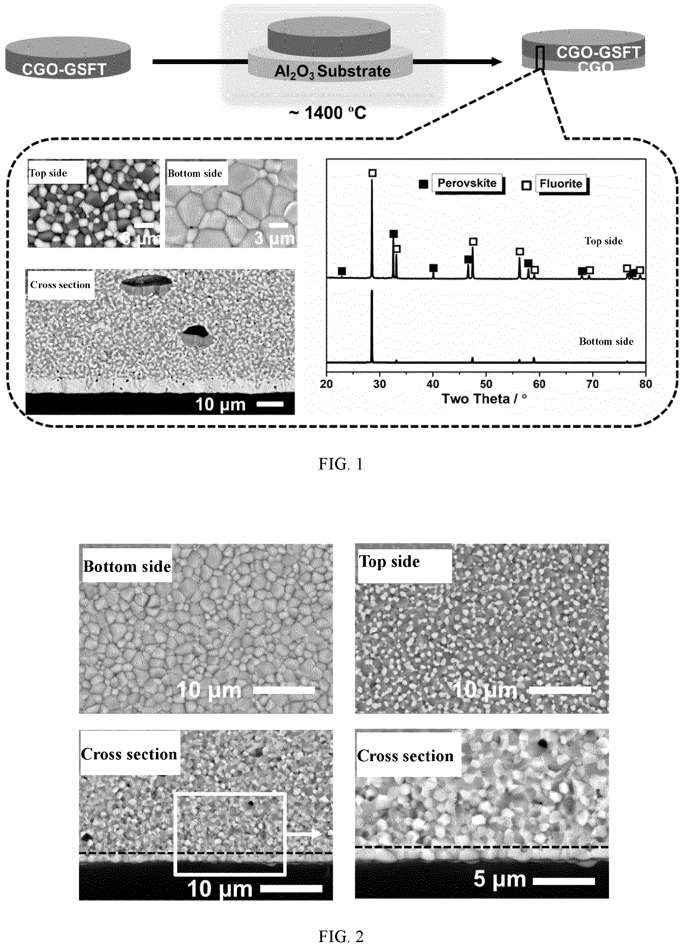

An appropriate amount of 60CGO-40GSFT powder was weighed and pressed under a pressure of 150 MPa to form a green body. The green body was placed on an Al₂O₃ substrate and heated from room temperature to 1450 °C. After a 10-hour dwell time, it was cooled to room temperature to obtain a (60CGO-40GSFT)/CGO bilayer structured membrane. As shown in FIG. 1, the sintered sample exhibited a dual-phase structure of cubic fluorite and cubic perovskite on the upper surface. However, the bottom surface in contact with the Al₂O₃ substrate showed only the CGO phase. Scanning electron microscopy revealed that the CGO layer on the bottom surface was dense with a thickness of approximately 5 µm, indicating phase separation at the interface with the Al₂O₃ substrate during high-temperature treatment, resulting in the self-assembly of a (60CGO-40GSFT)/CGO bilayered structure.

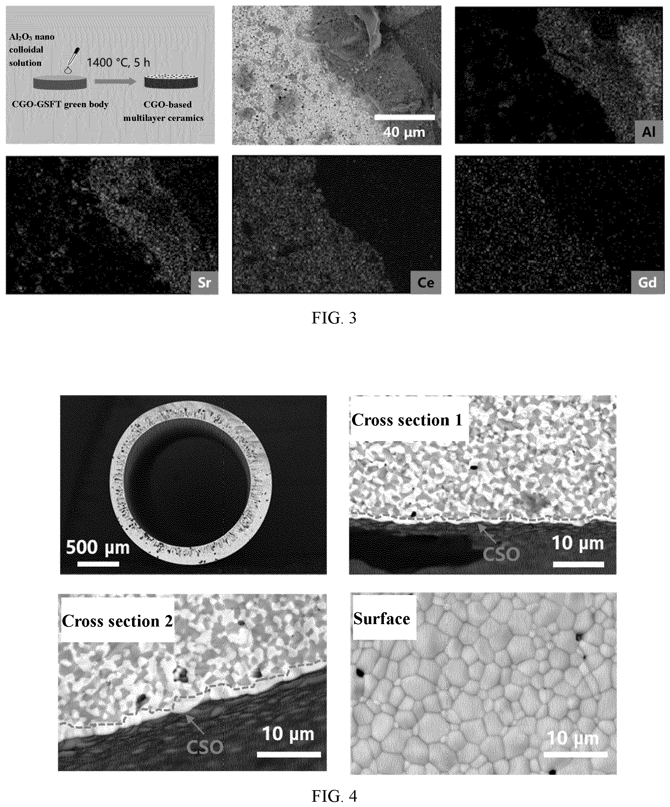

Based on the above procedure, once lowering the sintering temperature to 1350 °C, the thickness of the dense CGO layer in contact with the Al₂O₃ substrate was reduced to approximately 1 µm, as shown in FIG. 2. Additionally, Al₂O₃ nano colloidal solution was drop-coated onto the surface of the CGO-GSFT green body. After high-temperature sintering, CGO enrichment was also observed, as shown in FIG. 3. For the green body prepared by phase inversion process, firstly a casting slurry with a certain solid content was prepared. After ball milling, mixing and degassing steps, a hollow fiber green body of 60 mol% Ce_{0.8}Sm_{0.2}O_{2-δ} - 40 mol% Sm_{0.2}Sr_{0.8}Fe_{0.6}Ti_{0.4}O_{3-δ} (CSO-SSFT) was prepared using the dry-wet phase inversion spinning technique. Subsequently, Al₂O₃ colloid solution was sprayed onto the surface of the green body. After sintering, CSO enrichment was observed on the surface, as shown in FIG. 4. These results indicate that the thickness of the interface-enriched fluorite-structured oxide layer can be controlled by adjusting the sintering conditions, and different alumina compositions can induce interface enrichment in the composite green body.

### Example 3: Preparation of three-layered CeO₂-doped ceramics

CGO-GSFT powder was prepared according to Example 1 of the present invention. Then, an appropriate amount of CGO-GSFT powder was weighed and mixed with starch and carbon fiber (in a mass ratio of 70 : 24 : 6). The mixture was ball-milled at a rotational speed of 500 rpm and dried. Similarly, an appropriate amount of CGO-GSFT powder was weighed and mixed with starch (in a mass ratio of 90 : 10). The mixture was ball-milled at a rotational speed of 500 rpm and dried.

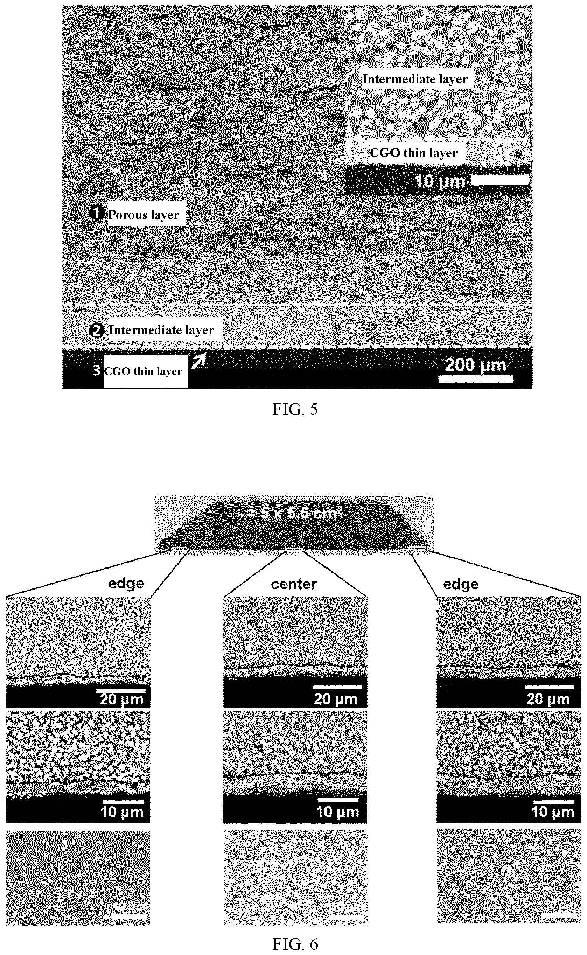

0.15 g of CGO-GSFT powder, 0.15 g of starch-containing CGO-GSFT powder and 0.9 g of starch and carbon fiber-containing CGO-GSFT powder (where starch and carbon fibers are gasified at high temperatures, resulting in a porous structure in the ceramics) were successively layered in a mold. The green body was pressed under a pressure of 150 MPa and placed on an α-Al₂O₃ substrate. After one sintering step, a (CGO-GSFT)/(CGO-GSFT)/CGO three-layered structured oxygen-permeable membrane was obtained. As shown in FIG. 5, scanning electron microscopy images revealed a three-layered structure of the sintered sample. The surface in contact with the Al₂O₃ substrate was a dense CGO layer with a thickness of approximately 3 µm. Connected to this layer was a dense CGO-GSFT intermediate layer (transition layer) with higher density and a thickness of approximately 100 µm. Connected to the intermediate layer was a CGO-GSFT porous support layer. Electron microscopy observations showed good adhesion between the three layers without any delamination, detachment and blistering.

### Example 4: Preparation of large-sized bilayered CeO₂-doped ceramics

CGO-GSFT powder was prepared according to Example 1 of the present invention. Approximately 20 g of 60CGO-40GSFT powder was weighed and evenly placed in a rectangular mold measuring 8 cm * 10 cm. The green body was obtained by applying a pressure of 70 MPa for 2 minutes. The green body was then cut into a square shape of approximately 7 cm * 7 cm. It was placed on Al₂O₃ powder and heated at 1450 °C for 10 h. After cooling, a (CGO-GSFT)/CGO bilayered structured oxygen-permeable membrane with a size of approximately 5 cm * 5 cm was obtained. As shown in FIG. 6, the sintered sample was flat, without any signs of bending, delamination or cracking. The surface layer in contact with the Al₂O₃ powder exhibited cubic fluorite structure, and the thickness of the CGO layer was approximately 3-5 µm.

### Example 5: Preparation of other CeO₂-based bilayered ceramic membranes

Eight different powders, namely CGO-GdSF, CGO-SFCo, CGO-SFCe, CGO-LaSFCo, CPO-PrSF, CPO-PrSFCo, CSO-LaSF, and CSO-SmSF, were prepared using the sol-gel method as described in Example 1. An appropriate amount of each composite powder was weighed and pressed under a pressure of 150 MPa to obtain green bodies. The green bodies were placed on α-Al₂O₃ substrates and heated at 1400 °C for 10 h. After cooling, eight different cerium oxide-based bilayer ceramics were obtained. As shown in FIG. 7, X-ray diffraction patterns of the sintered bilayered ceramics revealed that the bottom surfaces exhibited diffraction peaks of cerium oxide, while the top surfaces contained both fluorite and perovskite phases. This indicates that after heat treatment of eight green bodies, the interface separation occurred on the side in contact with Al₂O₃, resulting in the self-assembly of the bilayered structure.

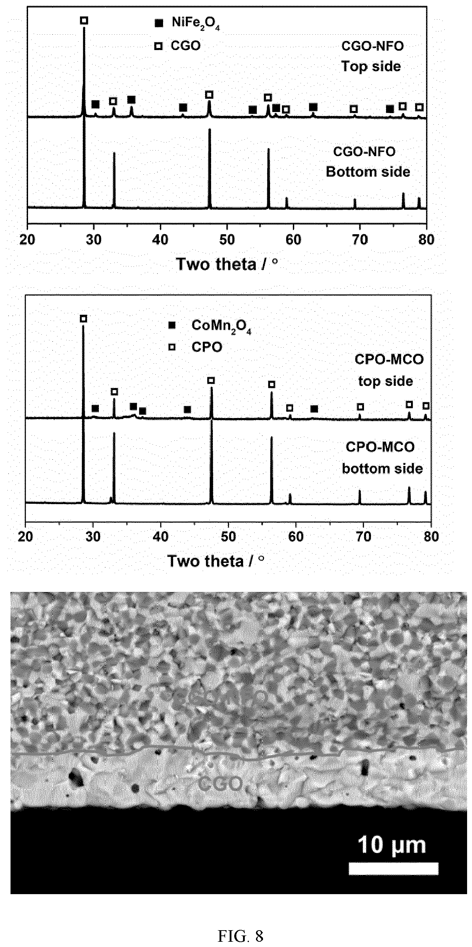

In addition, CGO-NFO and CPO-MCO powders were prepared according to Example 2. An appropriate amount of each composite powder was weighed and pressed under a pressure of 150 MPa to obtain green bodies. The green bodies were placed on Al₂O₃ substrates and heated at 1400 °C for 10 h. After cooling, as shown in FIG. 8, X-ray diffraction patterns and scanning electron microscopy images of the sintered samples revealed that the bottom surface of the sintered CGO-NFO sample exhibited diffraction peaks of CGO, while no spinel structure of NFO was observed. Similarly, the bottom surface of the sintered CPO-MCO sample retained diffraction peaks of CPO, but the peaks of MCO disappeared. This indicates that after heat treatment of CGO-NFO and CPO-MCO green bodies, the interface separation occurred on the side in contact with Al₂O₃, resulting in the formation of the bilayered structure.

### Example 6: Preparation of YSZ-based multilayer ceramic

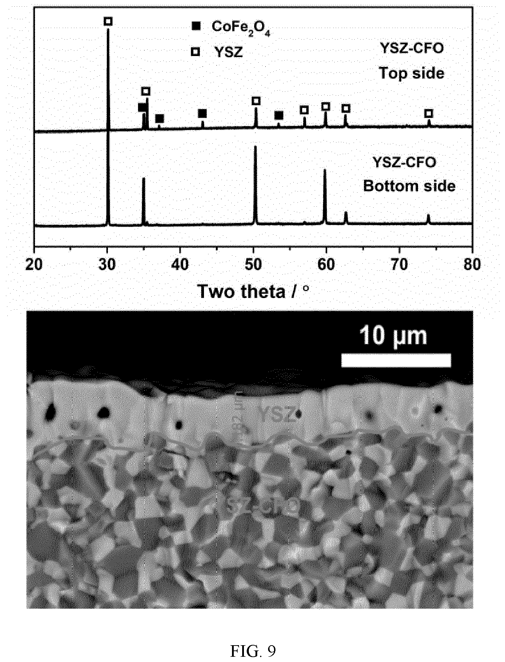

Y_{0.08}Zr_{0.92}O_{2-δ}-CoFe₂O₄ (YSZ-CFO) composite powder was prepared using the EDTA-citric acid method as described in Example 1. After pressing and shaping, the green bodies were placed on Al₂O₃ substrates and sintered at a temperature of 1450 °C for a dwell time of 5 hours. FIG. 9 shows the X-ray diffraction patterns and scanning electron microscopy images of the sintered samples. It can be observed that the bottom surface of the sintered YSZ-CFO sample exhibited diffraction peaks ofYSZ, while no spinel structure of CFO was detected. This indicates that the interface self-assembly strategy is also applicable to the YSZ-CFO system.

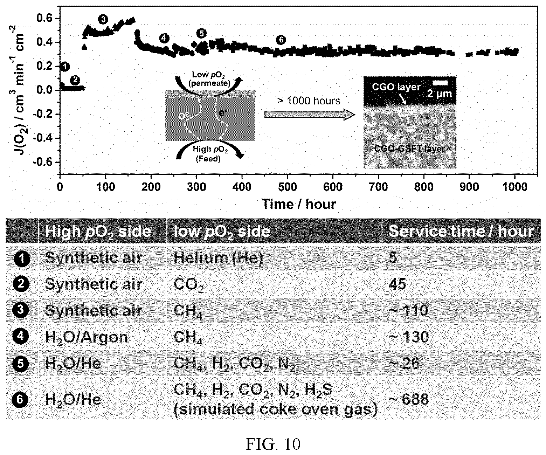

Multilayer ceramics obtained in Example 2 were used as oxygen permeable membranes for air separation, methane oxidation and water splitting. The (CGO-GSFT)/CGO bilayered oxygen permeable membrane prepared in Example 2 was sealed and placed in a high-temperature tubular furnace. When the temperature reached 925 °C, six different conditions were applied to the membrane, including Air and He (F_{(Air)} = 30 cm³ min⁻¹; F_{(He)} = 20 cm³ min⁻¹), Air and CO₂ (F_{(Air)} = 20 cm³ min⁻¹; F_{(CO2)} = 10 cm³ min⁻¹), Air and CH₄ (F_{(Air)} = 20 cm³ min⁻¹; F_{(CH4)} = 6 cm³ min⁻¹), H₂O-Ar and CH₄ (F_{(H2O)} = 16 cm³ min⁻¹; F_{(Ar)} = 4 cm³ min⁻¹; F_{(CH4)} = 6 cm³ min⁻¹), H₂O-He and CH₄-H₂-CO₂-N₂ (F_{(H2O)} = 16 cm³ min⁻¹; F_{(He)} = 4 cm³ min⁻¹; F_{(CH4)} = 4 cm³ min⁻¹; F_{(H2)} = 6 cm³ min⁻¹; F(CO₂) = 1 cm³ min⁻¹, F(N₂) = 2 cm³ min⁻¹), H₂O-He and CH₄-H₂-CO₂-N₂-H₂S (F_{(H2O)} = 16 cm³ min⁻¹; F_{(He)} = 4 cm³ min⁻¹; F_{(CH4)} = 4 cm³ min⁻¹; F_{(H2)} = 6 cm³ min⁻¹; F(CO₂) = 1 cm³ min⁻¹, F(N₂) = 2 cm³ min⁻¹; H₂S = 37 ppm). A gas chromatograph was employed for online detection of the exit gases on both sides of the oxygen-permeable membrane. As shown in FIG. 10, during a period of over 1000 hours, the oxygen permeation flux under the six different conditions was recorded. As the oxygen partial pressure gradient on both sides of the membrane increased, the oxygen permeation flux of the (CGO-GSFT)/CGO bilayered membrane gradually increased. In the Air/CH₄ condition, coupling oxygen separation with methane conversion reaction, the oxygen permeation performance reached 0.6 cm³ min⁻¹ cm⁻². Additionally, when the opposite sides of the (CGO-GSFT)/CGO membrane was exposed to simulated coke oven gas and steam atmospheres, the oxygen permeable membrane still operated continuously and stably for over 700 hours. The hydrogen production rate from water decomposition remained essentially stable at 0.8 cm³ min⁻¹ cm⁻². This indicates that the (CGO-GSFT)/CGO membrane not only possesses superior oxygen permeation performance but also confirms its excellent stability under harsh working conditions.

It should be noted finally that the above are only the preferred embodiments of the present invention and shall not limit the present invention. Although the present invention has been described in detail with reference to the foregoing embodiments, those skilled in the art can still modify the technical solutions recorded in the foregoing embodiments, or make equivalent replacements to some parts of them. Any modifications, equivalent replacements, improvements, etc. made within the spirit and principle of the present invention shall fall within the protection scope of the present invention.

## Claims

1. A method for preparing a multilayered ceramic membrane with a thin oxide layer, **characterized by** comprising:
making a composite material with a fluorite-structured oxide and a perovskite-structured or spinel-structured oxide as raw materials, then preforming to obtain a green body;
contacting a surface of the green body with Al₂O₃, after sintering, multilayered ceramic membrane with a thin oxide layer was obtained.

2. The method according to claim 1, **characterized by** the fluorite-structured oxide has a stoichiometric formula of Ce₁₋ₐAₐC_{2-δ} or B_{b}Zr_{1-b}O_{2-δ}, where A is selected from one or more of La, Pr, Nd, Pm, Sm, Eu, Gd, Tb, Dy, Ho, Er, Tm and Yb, 0 ≤ a ≤ 1, δ is the oxygen lattice defect number; B is selected from one or more of Y, Sc, Yb, Pr, Bi, Er and Ce, 0 ≤ b ≤ 1, δ is the oxygen lattice defect number.

3. The method according to claim 1, **characterized by** the perovskite-structured oxide has a stoichiometric formula of MₘSr₁₋ₘFe₁₋ₙNₙO_{3-δ}, where M is selected from one or more of La, Pr, Nd, Pm, Sm, Eu, Gd, Tb, Dy, Ho, Er, Tm, Yb, Ba, Ca and Bi; N is selected from one or more of Mg, Ca, Sc, Ti, V, Cr, Mn, Co, Ni, Cu, Zn, Zr, Y, Nb, Mo, Tc, Ru, Rh, Pd, Ag, Al, In, W, La, Gd and Ce; 0 ≤ m ≤ 0.5, 0 ≤ n ≤ 0.5, δ is the oxygen lattice defect number.

4. The method according to claim 1, **characterized by** the spinel-structured oxide has a stoichiometric formula of X_{3-y}Y_{y}O₄, where X is selected from one or more of Mg, Fe, Co, Ni, Mn, Zn and Cd, Y is selected from one or more of Al, Fe, Co, Cr, Ga and Mn, 0 ≤ y ≤ 3.

5. The method according to claim 1, **characterized by** a method for making the composite material comprises ball milling, solid-state reaction or sol-gel method.

6. The method according to claim 1, **characterized by** a method of preforming comprises dry pressing, phase conversion and extrusion molding method.

7. The method according to claim 1, **characterized by** a method for contacting the surface of the green body with Al₂O₃ comprises placing the green body on a sapphire wafer made of Al₂O₃, or sandwiching the green body between two sapphire wafers made of Al₂O₃, or coating the green body with Al₂O₃ nano colloidal solution.

8. The method according to claim 1, **characterized by** the Al₂O₃ is the sapphire wafer made of Al₂O₃, an Al₂O₃ powder, or Al₂O₃ nano colloidal solution.

9. A multilayered ceramic membrane with a thin oxide layer prepared by a method according to any one of claims 1-8, **characterized by** the multilayered ceramic membrane comprises a bilayer structure or a three-layer structure;
preferably, the bilayered structure consists of a single-phase fluorite-structured CAO or BZO thin layer and a composite layer;
or, the three-layered structure includes a single-phase CAO or BZO thin layer, a dense composite material layer in the middle, and a porous layer on the bottom side; or, the three-layered structure includes a single-phase CAO or BZO thin layer, a dense composite material layer in the middle, and a CAO or BZO thin layer on the bottom side.

10. Application of a multilayered ceramic membrane with a thin oxide layer according to claim 9 in selectively separating oxygen from oxygen-containing mixed gases, catalytic partial oxidation of hydrocarbons, hydrogen production through H₂O decomposition, or solid oxide cells.
